# EUROPEAN PATENT SPECIFICATION

(11) **EP 4 227 189 B1**
(45) Date of publication and mention of the grant of the patent: **16.04.2025**
(21) Application number: 21877045.1
(22) Date of filing: 13.09.2021
(51) Int. Cl.: B61F 7/00, F16D 3/06, F16C 11/06

(54) **JOINTED CONNECTION FOR TRANSMITTING TORQUE IN A VARIABLE-GAUGE RAIL AXLE**
GELENKVERBINDUNG ZUR DREHMOMENTÜBERTRAGUNG IN EINER SCHIENENACHSE MIT VARIABLEM KALIBER
LIAISON ARTICULÉE POUR TRANSMISSION DE TORSION DANS UN AXE FERROVIAIRE DE LARGEUR VARIABLE

(30) Priority: 05.10.2020 ES 202031004
(43) Date of publication of application: 16.08.2023
(73) Proprietor: Variable Gauge Systems SL, 41920 San Juan de Aznalfarache - Sevilla (ES)
(72) Inventor: RUBIO DE HITA, Beltran, 41849 Aznalcazar - Sevilla (ES)
(74) Representative: Del Valle Valiente, Sonia
(86) International application number: PCT/ES2021/070657
(87) International publication number: WO 2022/074266

(56) References cited:
- EP-A1- 3 020 610
- CN-A- 107 061 527
- CN-U- 208 651 460
- DE-A1- 2 047 761
- ES-A1- 2 428 239
- ES-A1- 338 183
- GB-A- 590 924
- SU-A1- 393 494
- SU-A1- 631 702
- US-A- 3 584 918

## Description

### OBJECT OF THE INVENTION

Generally, the invention belongs to the railway sector, and more particularly to devices used for changing the gauge of a rail axle.

The object of the present invention relates to a novel connection between the wheels and the axle for transmitting torque in a variable-gauge rail axle.

### BACKGROUND OF THE INVENTION

Variable-gauge rail axles are designed to adapt to several different track gauges. To that end, these axles have a mechanism designed to allow the wheels to slide along the axle between two or more positions corresponding to respective track gauges. Once located in the position corresponding to the desired gauge, a fixing system locks the position of the wheels. Therefore, unlike conventional rail axles, in a variable-gauge rail axle the wheels are not fixed to the axles.

Since the wheels are not fixed to the axles, the coupling mechanisms of variable-gauge rail axles must have a coupling system capable of transmitting the torque from the wheels to the axle. In fact, due to the loads supported by the rail axle, as well as the braking stresses to which it is subjected during its normal service life, a torsional stress that tends to misalign the wheels and the axle arises. Conventional coupling systems that do not allow the possibility of pitching between axles and wheels such as, for example splined or tongued-and-grooved coupling systems, deteriorate rapidly due to the accumulation of fatigue loads. In this context, it should be noted that a fatigue cycle occurs for each revolution of the wheel. Taking into account that a rail axle has a service life of several million kilometers, the number of fatigue cycles to which the axle is subjected can exceed 10⁹. Therefore, even if the loads in each cycle are small, the wheel-axle coupling system can break due to fatigue. In short, the problem of torque transmission in variable-gauge rail axles is a key aspect for axle viability.

Patent ES2428239B1, belonging to the inventor of the present application, describes a rail axle that can be adapted to several track gauges. In this document, the problem of torque transmission is solved by means of a coupling system formed by two semi-compasses that are fixed respectively to the axle and to the wheel and jointed such that they can open or close in order to adapt to the different positions of the wheel, as well as perform pitching to absorb misalignments between the wheel and axle, transmitting torque without clearances in all the positions of the wheel with respect to the axle.

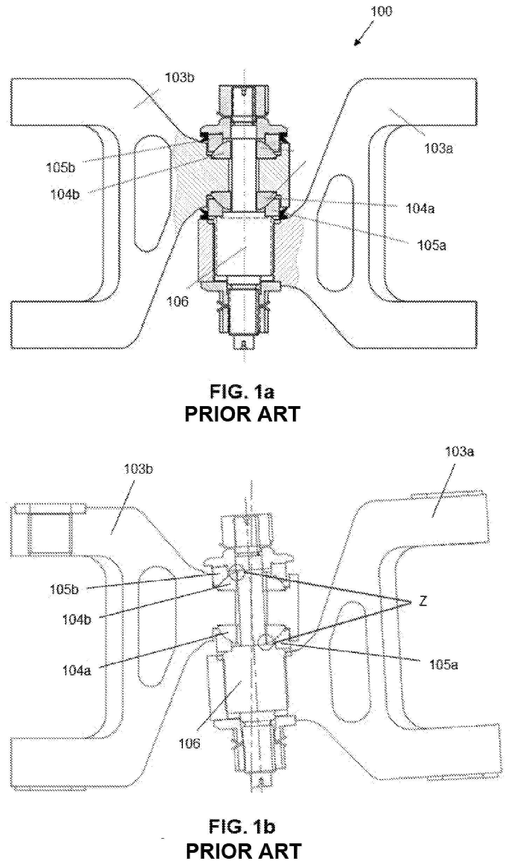

Figures 1a and 1b show sectional views of a connection (100) according to patent ES2428239B1. As can be seen, the jointed compasses are formed by two semi-compasses (103a, 103b) having two arms at one end and a single arm at the other end, being connected on the side provided with single arm by means of joints (104a, 104b) and coupled by means of a shaft (106). Specifically, the semi-compass (103a) houses the shaft (106) which stacks the cups (105a, 105b), the joints (104a, 104b), and the semi-compass (103b).

Supposedly, semi-compass (103a) is fixed to the axle of the wheel (not shown) and semi-compass (103b) is fixed to the wheel (not shown). When torque is transmitted from semi-compass (103a) to semi-compass (103b), semi-compass (103a) transmits stress to the shaft (106), which transmits the torque by contact to the cup (105a), which also transmits same by pressure to the joint (104a) and to semi-compass (103b), which finally transmits same to the wheel. This is the optimal route for torque transmission, since torque is always transmitted by pressure between contacting surfaces.

However, in the case where torque is transmitted in the opposite direction with semi-compass (103a) driving semi-compass (103b) during the movement thereof, semi-compass (103a) transmits stress to the shaft (106) through the thread, and the latter transmits same by traction to the cup of the farthest joint which transmits the stress by pressure between surfaces to the cup (105b) and from the joint (104b) to semi-compass (103b).

In this second case, the route followed involves causing the shaft (106) coupling the semi-compasses (103a, 103b) to work under traction and also bending due to the friction between the joint and the cup, accumulating a stress cycle at each turn. Since the shaft coupling the semi-compasses is the weakest part of the system, the accumulation of fatigue loads could lead to shaft breakage and it constitutes a problem for systems that require greater stress transmission, like in the case of drive shafts or shafts with disc brakes incorporated in the central area of the shaft.

On the other hand, as shown in Figure 1b, there is the drawback that the shaft (106) is fixed to the cups (105a, 105b) and goes through the hole of the joints (104a, 104b). As a result thereof, the pitching movement between both semi-compasses (103a, 103b) is limited by the difference in diameters between the shaft (106) and the hole of the joint (104a, 104b), thus imposing a mechanical limit that restricts movement and forces greater precision in assembly. Furthermore, shaft breakage could occur if the shaft (106) comes into contact with the joint (104a, 104b) in the areas marked in Figure 1b.

Also documents EP 3 020 610 A1 and DE 20 47 761 A1 disclose a relevant prior art.

Breakage of the coupling joint of a single semi-compass assembly would not be catastrophic, since two or more such coupling systems are assembled typically. However, it would cause an overload on the remaining coupling systems which, under very adverse conditions, could lead to breakage of the remaining coupling systems. This risk increases if the axle is a drive axle, since in this case, in addition to transmitting torque due to self-centering on the track, it must also transmit traction and braking forces.

In short, there is still a need in the art of a wheel-rail axle coupling system which solves the preceding problems.

### DESCRIPTION OF THE INVENTION

The present invention describes a jointed connection for coupling the axle and the wheel in a variable-gauge rail axle which solves the preceding problems. The main concept consists of the use of a spherical joint which connects two forks which are in turn connected respectively to the wheel and to the axle. This spherical joint allows the misalignment between the two forks, and therefore also between the wheel and the rail axle.

More specifically, the connection of the present invention fundamentally comprises the following elements:
a) First fork

This is a fork comprising an inner side and an outer side.

The end of the outer side is connected to one of either the wheel or the rail axle rotatably about a transverse axis with respect to said wheel or axle. For example, in a particularly preferred embodiment, the connection between the end of the outer side of the first fork to the wheel or the axle comprises a bolt oriented according to the transverse axis going through holes arranged at the ends of two branches of said peripheral side.

### b) Second fork

The second fork has an inner side and an outer side.

The end of the outer side is connected to the other of either the wheel or the rail axle rotatably about a transverse axis with respect to said wheel or axle. Like in the first fork, in this case, the connection between the end of the outer side of the second fork to the wheel or the axle preferably comprises a bolt oriented according to the transverse axis going through holes arranged at the ends of two branches of said peripheral side.

### c) Ball-and-socket joint

The ball-and-socket joint connects the ends of the inner sides of the first and second forks to one another. In this way, an additional degree of freedom is provided to the coupling between both forks allowing misalignments between the wheel and the rail axle, thereby reducing the wear that occurs throughout the service life of said rail axle.

In principle, the ball-and-socket joint can be implemented in different manners as long as it allows said misalignments. Specifically, according to a particularly preferred embodiment of the invention, the ball-and-socket joint comprises a central arm of the inner side of the first fork arranged between two side arms of the inner side of the second fork. Furthermore, opposite faces of the end of the central arm of the first fork comprise two spherical joints retained between two cups fixed by means of two corresponding supports screwed into holes arranged at the ends of the two side arms of the second fork. In other words, the spherical joints fixed to the faces of the end of the central arm of the first fork are housed inside spherical cavities of the cups which are in turn fixed to the side arms of the second fork. In this way, a misalignment between the axes of rotation of the first and the second forks, respectively, and therefore also between the axles of the wheel and the rail axle, can occur.

According to a particularly preferred embodiment of the invention, each support comprises a first segment for support against the cup, a second threaded segment for the fixing thereof to the hole of the end of the arm of the second fork, a third threaded segment for receiving a lock nut, and a fourth polygonal-shaped segment for setting the cup in its position. These supports allow a simple assembly and disassembly of the ball-and-socket joint.

### BRIEF DESCRIPTION OF THE FIGURES

Figures 1a and 1b show a sectional view of a connection according to the prior art.

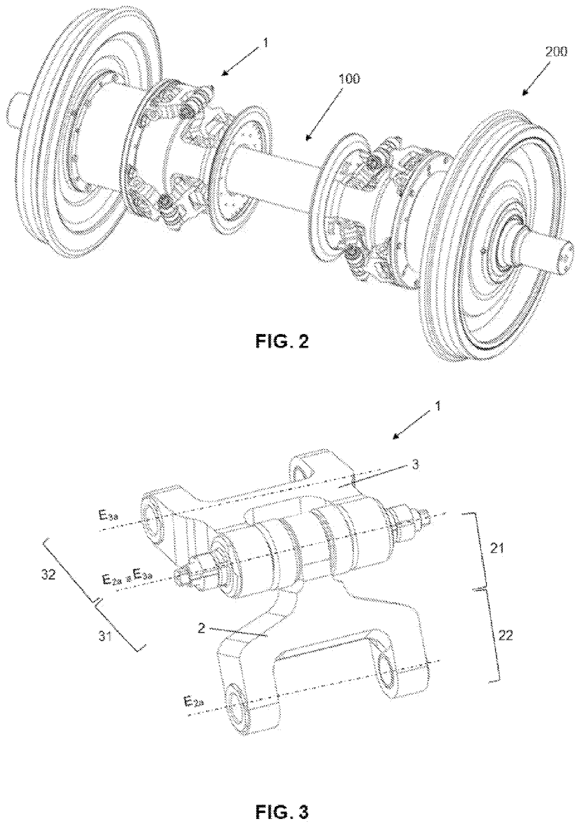

Figure 2 shows a perspective view of a rail axle with the wheels coupled and provided with a connection according to the present invention.
Figure 3 shows a perspective view of a connection according to the present invention.

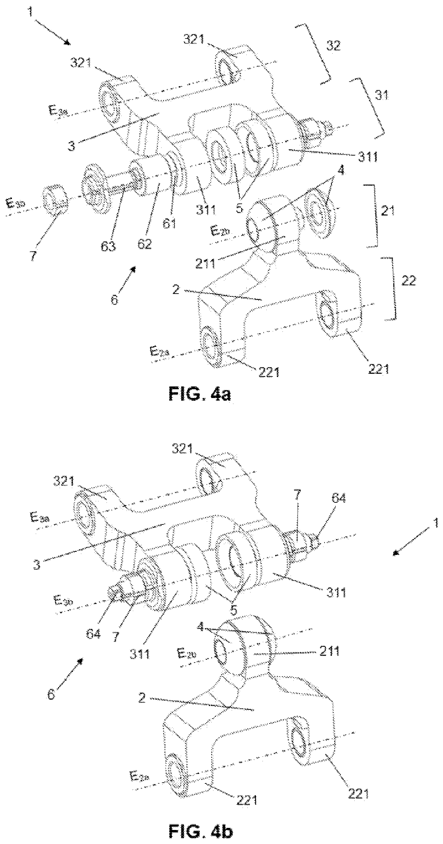

Figures 4a and 4b show respective perspective views of a connection according to the present invention in a partially disassembled state.
Figure 5 shows a perspective view of a connection according to the present invention in which the misalignment between both forks can be seen.
Figure 6 shows a perspective view showing the coupling between the connection of the invention and the wheel of the rail axle.

### PREFERRED EMBODIMENT OF THE INVENTION

An example of the connection (1) according to the present invention is described below in reference to the attached figures in which the different parts making up same can be seen.

The connection (1) is fundamentally formed by a first fork (2) and a second fork (3) which are connected by means of a ball-and-socket joint.

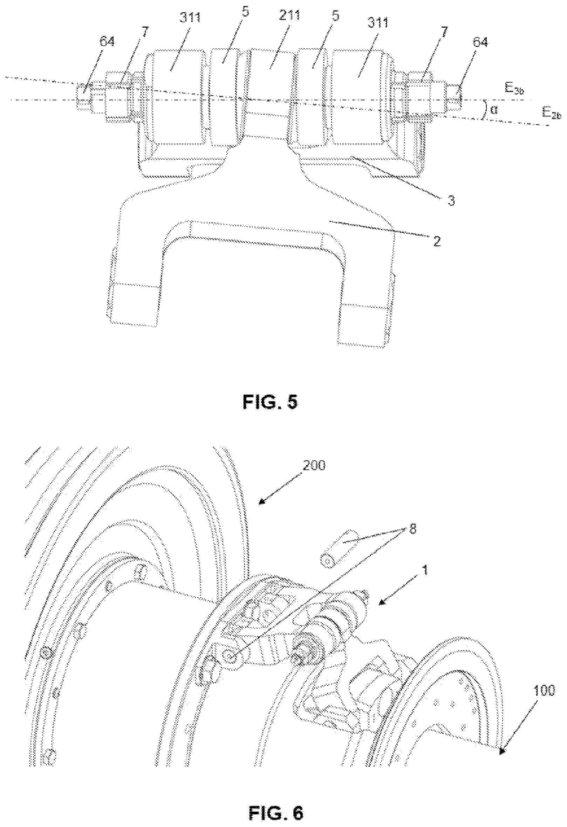

The first fork (2) has an inner side (21) and an outer side (22). It has two essentially parallel branches (221) on the outer side (22) which are provided with respective aligned holes for the rotatable coupling thereof to the rail axle (100). As can be clearly seen in Figure 6, the coupling is performed by passing a bolt or pin through said aligned holes and corresponding holes arranged in a part integral with the rail axle (100). The outer side (22) of the first fork (2) is thereby jointed to the rail axle (100) about an axis (E₂ₐ) contained in a plane transverse to said rail axle (100). This joint is rigid as it only allows one degree of freedom.

On the other hand, the inner side (21) of the first fork (2) has a central arm (211) essentially parallel to the branches (221) of the inner side (22). Spherical joints (4) are fixed on the side faces of the end of the central arm (211) of said inner side (21). Specifically, each of these joints (4) comprises a spherical portion, for example, an essentially half-sphere portion.

The second fork (3) also has an inner side (31) and an outer side (32). The outer side (32) of the second fork (3) is similar to that of the first fork (2), and has two essentially parallel branches (321) provided with respective aligned holes for the rotatable coupling thereof to the wheel (200). As shown in Figure 6, the coupling is performed by means of a bolt (8) going through said holes and corresponding holes of a part integral with the wheel (200). The outer side of the second fork (3) is also thereby jointed to the wheel (200) about an axis (E₃ₐ) contained in a plane transverse to the axis of rotation of the wheel (200). This joint is also rigid as it only allows one degree of freedom.

The inner side (31) of the second fork (3) comprises two arms (311) essentially parallel to one another and parallel to the branches (321) of the outer side (32) thereof. These arms (311) have at their end respective aligned holes, and on the inner faces of said ends they are configured to support of cups (5). Each cup (5) has an essentially spherical cavity which is complementary to the shape of the joints (4).

The end of the central arm (211) of the first fork (2) can therefore be placed between the two ends of the arms (311) of the second fork (3) such that the joints (4) are housed inside the cups (5), thereby forming the ball-and-socket joint which connects the first fork (2) and the second fork (3). To complete the joint, supports (6) screwed into the holes arranged at the ends of the inner side (31) of the arms (311) compress the cups (5) against the joints (4). These supports (6) have, fundamentally, four parts or segments: a first segment (61) having a diameter designed to be fitted into a cylindrical cavity arranged on a face of the cup (5) opposite that on which a spherical cavity is arranged; a second threaded segment (62) which is fixed, by means of thread, into the hole of the end of the corresponding arm (311); a third also threaded segment (63) for fixing, by means of thread, a lock nut (7) of the assembly; and a fourth segment (64) located at the end and having a polygonal shape, such that the support (6) can be rotated as a whole to be suitably place the cup (5).

As a result of this configuration, this connection (1) allows a certain misalignment between the first fork (2) and the second fork (3). Figure 5 shows such a situation where the axis (E_{2b}) going through the hole of the end of the central arm (211) of the first fork (2) and the axis (E_{3b}) going through the holes of the ends of the side arms (311) of the second fork (3) form an angle α. Therefore, this connection (1) allows misalignment between the wheel (200) and the rail axle (100), when required, based on the stresses to which they are subjected throughout their service life, thereby preventing breakages caused by fatigues loads.

## Claims

1. A jointed connection (1) for transmitting torque in a variable-gauge rail axle, comprising:
- a first fork (2) comprising an inner side (21) and an outer side (22), wherein an end of the outer side (22) is to be connected to one of either a wheel (200) or a rail axle (100) rotatably about a transverse axis (E₂ₐ) with respect to said wheel (200) or rail axle (100);
- a second fork (3) having an inner side (31) and an outer side (32), wherein an end of the outer side (32) is to be connected to the other of either the wheel (200) or the rail axle (100) rotatably about a transverse axis (E₃ₐ) with respect to said wheel (200) or rail axle (100);
wherein the ends of the inner sides (21, 31) of the first and second forks (2, 3) are connected to one another by means of a ball-and-socket joint,
and wherein the ball-and-socket joint is connected with a central arm (211) of the inner side (21) of the first fork (2) wherein two spherical joints (4) retained between two cups (5) are arranged on opposite faces of the end of the central arm (211) of the first fork (2), **characterized in that** the ball-and-socket joint is arranged between two side arms (311) of the inner side (31) of the second fork and **in that** the two cups (5) are fixed by means of two corresponding supports (6) screwed into holes arranged at the ends of the two side arms (311) of the second fork (3).

2. The connection (1) according to claim 1, wherein each support (6) comprises a first segment (61) for support against the cup (5), a second threaded segment (62) for the fixing thereof to the hole of the end of the arm (311) of the second fork (3), a third threaded segment (63) for receiving a lock nut (7), and a fourth polygonal-shaped segment (64) for setting the cup (5) in its position.

3. The connection (1) according to any of the preceding claims, wherein the connection between the ends of the outer sides (22, 32) of the first and the second forks (2, 3) to the wheel (200) or the rail axle (100) comprises a bolt (8) oriented according to the transverse axis (E₂ₐ, E₃ₐ) going through holes arranged at the ends of two branches (221, 321) of said outer side (22, 32).

## Patentansprüche

1. Gelenkverbindung (1) zur Drehmomentübertragung in einer Schienenachse mit variablem Kaliber, umfassend:
- eine erste Gabel (2), die eine Innenseite (21) und eine Außenseite (22) umfasst, wobei ein Ende der Außenseite (22) mit einem von entweder einem Rad (200) oder einer Schienenachse (100) drehbar um eine Querachse (E₂ₐ) in Bezug auf das Rad (200) oder die Schienenachse (100) verbunden werden soll;
- eine zweite Gabel (3), die eine Innenseite (31) und eine Außenseite (32) aufweist, wobei ein Ende der Außenseite (32) mit dem anderen von entweder dem Rad (200) oder der Schienenachse (100) drehbar um eine Querachse (E₃ₐ) in Bezug auf das Rad (200) oder die Schienenachse (100) verbunden werden soll;
wobei die Enden der Innenseiten (21, 31) der ersten und der zweiten Gabel (2, 3) mittels eines Kugelgelenks miteinander verbunden sind, und wobei das Kugelgelenk mit einem zentralen Arm (211) der Innenseite (21) der ersten Gabel (2) verbunden ist,
wobei zwei zwischen zwei Schalen (5) gehaltene Kugelgelenke (4) auf gegenüberliegenden Seiten des Endes des zentralen Arms (211) der ersten Gabel (2) angeordnet sind, **dadurch gekennzeichnet, dass** das Kugelgelenk zwischen zwei Seitenarmen (311) der Innenseite (31) der zweiten Gabel angeordnet ist und dass die beiden Schalen (5) mittels zweier entsprechender Stützen (6) befestigt sind, die in Löcher geschraubt sind, die an den Enden der beiden Seitenarme (311) der zweiten Gabel (3) angeordnet sind.

2. Verbindung (1) nach Anspruch 1, wobei jede Stütze (6) ein erstes Segment (61) zur Abstützung an der Schale (5), ein zweites, mit Gewinde versehenes Segment (62) zur Befestigung an dem Loch des Endes des Arms (311) der zweiten Gabel (3), ein drittes, mit Gewinde versehenes Segment (63) zur Aufnahme einer Kontermutter (7) und ein viertes, polygonal geformtes Segment (64) zum Einstellen der Schale (5) in ihre Position umfasst.

3. Verbindung (1) nach einem der vorhergehenden Ansprüche, wobei die Verbindung zwischen den Enden der Außenseiten (22, 32) der ersten und der zweiten Gabel (2, 3) mit dem Rad (200) oder der Schienenachse (100) einen Bolzen (8) umfasst, der gemäß der Querachse (E₂ₐ, E₃ₐ) ausgerichtet ist und durch Löcher geht, die an den Enden von zwei Schenkeln (221, 321) der Außenseite (22, 32) angeordnet sind.

## Revendications

1. Raccord jointé (1) pour la transmission de couple dans un essieu ferroviaire à écartement variable, comprenant :
- une première fourche (2) comprenant un coté interne (21) et un côté externe (22), dans lequel une extrémité du côté externe (22) doit être raccordée à l'un parmi une roue (200) ou un essieu ferroviaire (100) de manière rotative autour d'un axe transversal (E₂ₐ) par rapport à ladite roue (200) ou audit essieu ferroviaire (100) ;
- une seconde fourche (3) ayant un côté interne (31) et un côté externe (32), dans lequel une extrémité du côté externe (32) doit être raccordée à l'autre parmi la roue (200) ou l'essieu ferroviaire (100) de manière rotative autour d'un axe transversal (E₃ₐ) par rapport à ladite roue (200) ou audit essieu ferroviaire (100) ;
dans lequel les extrémités des côtés internes (21, 31) des première et seconde fourches (2, 3) sont raccordées l'une à l'autre au moyen d'un joint à rotule, et dans lequel le joint à rotule est raccordé à un bras central (211) du côté interne (21) de la première fourche (2),
dans lequel deux joints sphériques (4) retenus entre deux coupelles (5) sont agencés sur des faces opposées de l'extrémité du bras central (211) de la première fourche (2), **caractérisé en ce que** le joint à rotule est agencé entre deux bras latéraux (311) du côté interne (31) de la seconde fourche et **en ce que** les deux coupelles (5) sont fixées au moyen de deux supports correspondants (6) vissés dans des trous agencés au niveau des extrémités des deux bras latéraux (311) de la seconde fourche (3).

2. Raccord (1) selon la revendication 1, dans lequel chaque support (6) comprend un premier segment (61) pour un support contre la coupelle (5), un deuxième segment fileté (62) pour la fixation de celui-ci au trou de l'extrémité du bras (311) de la seconde fourche (3), un troisième segment fileté (63) pour la réception d'un contre-écrou (7), et un quatrième segment de forme polygonale (64) pour la fixation de la coupelle (5) dans sa position.

3. Raccord (1) selon l'une quelconque des revendications précédentes, dans lequel le raccord entre les extrémités des côtés externes (22, 32) de la première et de la seconde fourche (2, 3) à la roue (200) ou à l'essieu ferroviaire (100) comprend un boulon (8) orienté selon l'axe transversal (E₂ₐ, E₃ₐ) passant à travers des trous agencés au niveau des extrémités de deux branches (221, 321) dudit côté externe (22, 32).
